# EUROPEAN PATENT APPLICATION

(11) **EP 4 765 461 A1**
(43) Date of publication of application: **24.06.2026**
(21) Application number: 24913396.8
(22) Date of filing: 26.12.2024
(51) Int. Cl.: H01M 50/59, H01M 50/586, H01M 50/533, H01M 10/0587, H01M 50/538, H01M 50/528

(54) **ELECTRODE ASSEMBLY AND CYLINDRICAL SECONDARY BATTERY PROVIDED WITH SAME**

(30) Priority: 29.12.2023 KR 20230197349
(71) Applicant: LG Energy Solution, Ltd., Seoul 07335 (KR)
(72) Inventor: BAEK, Mingun, Daejeon 34122 (KR); YOON, Ujin, Daejeon 34122 (KR); KIM, Younjoong, Daejeon 34122 (KR); KIM, Won Joo, Daejeon 34122 (KR); KWAK, Minjeong, Daejeon 34122 (KR); JI, Sanggu, Daejeon 34122 (KR)
(74) Representative: Goddar, Heinz J.
(86) International application number: PCT/KR2024/021116
(87) International publication number: WO 2025/143789

(57) **Abstract**

Provided are a cylindrical electrode assembly and a tab-less secondary battery employing the same which uses the ends of electrode sheets without active material as electrode tabs. The electrode assembly structure prevents the risk of short circuits in the core section thereof and secures an additional current path in the core section, thereby reducing heat generation due to internal resistance. The core section of the electrode sheet is provided with a plateau that protrudes axially outward and extends in the lengthwise direction from an incision groove defining a segmented tab, the segmented tab is bent radially inward, and the upper end of the plateau is in contact with and is electrically connected to the unbent segmented tab.

## Description

### [TECHNICAL FIELD]

This application claims the benefit of priority based on Korean Patent Application No. 10-2023-0197349 filed on December 29, 2023, entire content disclosed in the document of the patent applications is included as a part of this specification.

The present invention relates to an electrode assembly and a cylindrical secondary battery including the same. More specifically, the present invention relates to a cylindrical electrode assembly and a tab-less secondary battery employing the same which uses the ends of electrode sheets without active material as electrode tabs. The electrode assembly structure prevents the risk of short circuits in the core section thereof and secures an additional current path in the core section, thereby reducing heat generation due to internal resistance.

### [BACKGROUND ART]

Secondary batteries are used in a variety of fields. Their scope of application has significantly expanded, from portable devices to energy storage media for vehicle operation.

Compared to pouch-type battery cells, cylindrical can battery cells are considered safer due to their metal housing. Recently, as cylindrical battery cell specifications have expanded, the non-coated portion of the electrode sheet, where the active material is not coated, have been used as electrode tabs to increase energy density.

In particular, by bending and overlapping the flag-shaped electrode tabs at the ends of the electrode assembly in a radial direction, the current path is distributed, which has the advantage of lowering internal resistance even in high-capacity battery cells.

However, even in these battery cells, the current path is not fully distributed because the electrode tabs are not formed in the core section. This is especially true when using small-diameter battery cells, where the core section occupies a large proportion of the overall electrode assembly diameter, further increasing the degree to which the current path is not distributed.

Meanwhile, to prevent the core cavity of the electrode assembly from being obscured by the electrode tabs during the battery cell assembly process, electrode tabs are not provided in the core section of the electrode assembly.

When the electrode tab disposed outer than the axial end of an electrode assembly is bent and laid down on the axial end without an electrode tab, there is a risk that the bent electrode tab portion comes into contact with another electrode sheet within the electrode assembly, causing a short circuit.

### [DISCLOSURE]

### [TECHNICAL PROBLEM]

In order to above-described problems, it is an object of the present invention to provide a structure of an electrode assembly and a cylindrical secondary battery employing the same wherein a path for direct current flow to the core section of the electrode assembly is provided to reduce the internal resistance, thereby minimizing the amount of heat generated due to the internal resistance during the charge and discharge process, and prevent the electrode tab bent toward the core section from short circuiting with another electrode within the electrode assembly.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to an electrode assembly in which an electrode sheet and a separator are laminated and then wound in a jelly-roll shape. The jelly-roll may be wound cylindrically.

The electrode sheet may extend in lengthwise direction and have a predetermined width. The core axis may correspond to the width of the electrode sheet.

The electrode sheet may be provided with a non-coated portion without an active material at one widthwise end thereof.

In the non-coated portion, a first incision groove extending axially outward at a plurality of locations spaced apart from each other in the lengthwise direction may be provided, and a plurality of segmented tabs may be formed by dividing the non-coated portion by the first incision groove.

The segmented tab may extend axially outward from the first valley, which is the lower end of the first incision groove to have a predetermined height. The height of the segmented tab may be greater than the minimum height that allows the segmented tab to be smoothly bent.

The non-coated portion includes:, in the lengthwise direction, a main section provided with the segmented tab; and a core section extending longitudinally inward from a core side end of the main section to a core side end of the electrode sheet.

The plurality of segmented tabs are provided in the main section. That is, the plurality of segmented tabs are not provided in the core section.

In the core section, a plateau extending in the lengthwise direction and protruding axially outer than a first valley of the first incision groove by a first height is provided.

The plurality of segmented tabs are radially bent at predetermined positions of lower ends thereof in a manner that upper ends thereof face a core side of a jelly roll.

The upper end of the plateau is in contact with and electrically connected to the inner side surface of a first segmented tab bent and disposed adjacent to a radially outer side of the plateau.

The plateau may extend axially outward to be in contact with the inner side surface of the first segmented tab.

The first height of the plateau is less than a height of the first segmented tab.

The first height may be determined at a level that ensures rigidity that prevents buckling in the axial direction.

The first height may be equal to or greater than 0.5mm and equal to or less than 1.5mm.

The height of the first segmented tab may be equal to or greater than 3mm.

The upper end of the plateau may be disposed axially outer than an axial end of the separator.

The first valley may be disposed axially outer than an axial end of the separator.

The plateau may be provided with a plurality of elastic protrusions divided by a second incision groove extending axially outward at a plurality of locations spaced apart from each other in lengthwise direction.

The upper ends of the plurality of elastic protrusions may be in contact with and electrically connected to the inner side surface of the first segmented tab.

The plurality of elastic protrusions may be curved radially inward and in contact with and electrically connected to inner circumferential surfaces of the plurality of segmented tabs.

The second valley may be disposed axially outer than the first valley.

The second height from the second valley of the second incision groove to the outer axial end of the elastic protrusion may be less than the first height.

The second height may be equal to or greater than 0.5mm and equal to or less than 1.0mm.

The difference between the first height and the second height may be equal to or greater than 0.5mm and equal to or less than 1.0mm.

The second valley may be disposed axially outer than the axial end of the separator.

The electrode assembly may further include a current collecting plate axially facing and welded to outer side surfaces of the plurality of segmented tabs to be electrically connected thereto.

The present invention provides a battery cell wherein an electrode assembly is accommodated in a can and an open end of the can is closed with a cap.

In one embodiment, outer side surfaces of a plurality of segmented tabs may be welded to a bottom member of the can.

In one embodiment, outer side surfaces of a plurality of segmented tabs may be welded to the cap.

In one embodiment, a center portion of a current collecting plate may be welded to a bottom member of the can to electrically connect the segmented tab to the bottom member of the can.

In one embodiment, a center portion of a current collecting plate may be welded to an electrode terminal installed at a center portion of a bottom member of the can in insulated and sealed manner to electrically connect the segmented tab to the electrode terminal.

In one embodiment, a current collecting plate may be bonded to the can or the cap to electrically connect the segmented tab to the can or the cap.

### [ADVANTAGEOUS EFFECTS]

According to the present invention, a plateau of a height sufficiently small to prevent buckling is formed in the core section of an electrode assembly to have the upper end of the plateau support radially inward and be in contact with a bent segmented tab so as to secure a current path to the core section while preventing the segmented tab from penetrating into the separator, thereby preventing short circuits between different electrodes.

According to the present invention, a small elastic protrusion is provided on the upper portion of the plateau to secure a larger contact area with the segmented tab, and to further enhance the buckling resistance of the plateau as the elastic protrusion deformed.

According to the present invention, a path for direct current flow to the core section is provided to reduce the internal resistance, thereby minimizing the amount of heat generated due to the internal resistance during the charge and discharge process.

In addition to the advantageous effects described above, specific effects of the present invention will be described further while describing specific details of the present invention.

### [BRIEF DESCRIPTION OF DRAWINGS]

FIG. 1 is an exploded view illustrating a first electrode sheet of an electrode assembly according to an embodiment.
FIG. 2 is an enlarged view illustrating the core section of FIG. 1.
FIG. 3 is an enlarged view illustrating a core section of a first electrode sheet according to another embodiment.
FIG. 4 is an exploded view illustrating a first electrode sheet, a second electrode sheet and a separator stacked on one another.
FIG. 5 is an enlarged view illustrating a core section of the electrode laminate of FIG. 4.
FIG. 6 is a side view illustrating the electrode laminate of FIG. 4 viewed from lengthwise direction.
FIG. 7 is a side view illustrating only the first electrode sheet near the core in a wound electrode laminate employing the first electrode sheet of FIG. 2.
FIG. 8 is a side view illustrating a segmented tab of the first electrode sheet of FIG. 7 bent radially inward.
FIG. 9 is a side view illustrating only the first electrode sheet near the core in a wound electrode laminate employing the first electrode sheet of FIG. 3.
FIG. 10 is a side view illustrating a segmented tab of the first electrode sheet of FIG. 9 bent radially inward.
FIG. 11 is a perspective view illustrating an electrode assembly with a segmented tab bent radially inward.
FIG. 12 is a perspective view illustrating a current collecting plate stacked on an axial end of the electrode assembly of FIG. 11 and bonded to the segmented tab.
FIG. 13 is a cross-sectional view illustrating an electrode assembly without a current collecting plate stacked thereon with a segmented tab thereof in contact with and bonded to the bottom of a can.
FIG. 14 is a cross-sectional view illustrating an electrode assembly having a current collecting plate stacked thereon to be in contact with and bonded to the bottom of the can.
FIG. 15 is a cross-sectional view illustrating an electrode assembly having a current collecting plate stacked thereon to be bonded and electrically connected to a cap assembly.
FIG. 16 is a cross-sectional view illustrating an electrode assembly having a current collecting plate stacked thereon to be bonded to an electrode terminal provided at the bottom of the can.
FIG. 17 is a cross-sectional view illustrating an electrode assembly having a current collecting plate stacked thereon to be bonded and electrically connected to a can.
FIG. 18 is a cross-sectional view illustrating a segmented tab of an electrode assembly without a current collecting plate stacked thereon to be in contact with and bonded to a cap.

### [DESCRIPTION OF REFERENCE NUMERALS]

10: electrode sheet, first electrode sheet
11: active material
12: non-coated portion
C: core section
13: plateau
h1: first height
131: elastic protrusion
137: second incision groove
139: second valley
h2: second height
M: main section
15: segmented tab, first segmented tab
157: first incision groove
158: first valley
H: height
O: outer circumferential section
20: second electrode sheet
30: separator
40: electrode assembly
50: current collecting plate
60: can
61: bottom member
62: electrode terminal
63: terminal gasket
64: insulator
65: sidewall member
66: beading portion
67: crimped portion
70: cap
71: cap gasket
W: bonding area

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

For convenience of description, in describing the embodiments, the direction of the long side of the electrode sheet is referred to as the lengthwise direction, and the direction of the short side is referred to as the widthwise direction. When such an electrode sheet is cylindrically wound, the lengthwise direction of the electrode sheet matches the circumferential direction of the electrode assembly, and the widthwise direction of the electrode sheet matches the axial direction of the electrode assembly. Furthermore, the front and back surfaces of the unwound electrode sheet match the inner circumferential surface and outer circumferential surface of the wound electrode sheet. The direction toward or away from the center axis of the electrode assembly is referred to as the radial direction. When the center of the electrode assembly is referred to as the core, and the outer perimeter of the electrode assembly is referred to as the outer circumference, the radially inner side and radially outer side of the wound electrode sheet may be referred to as the core side and outer circumferential side, respectively, of the unwound electrode sheet.

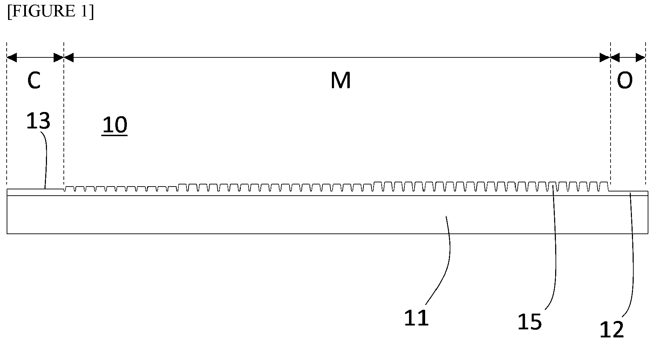

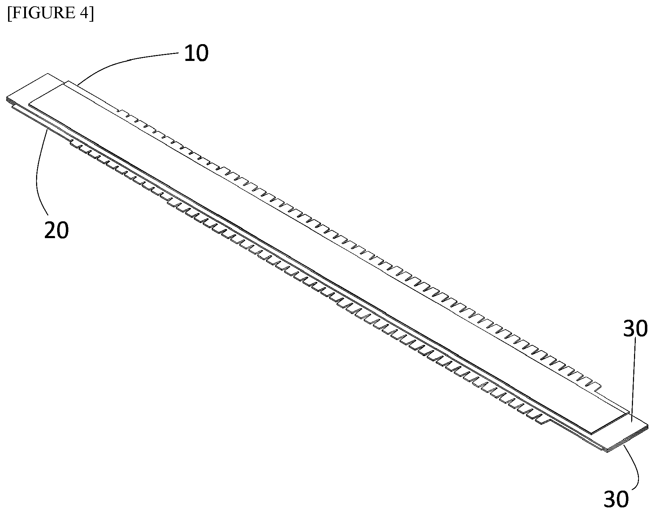

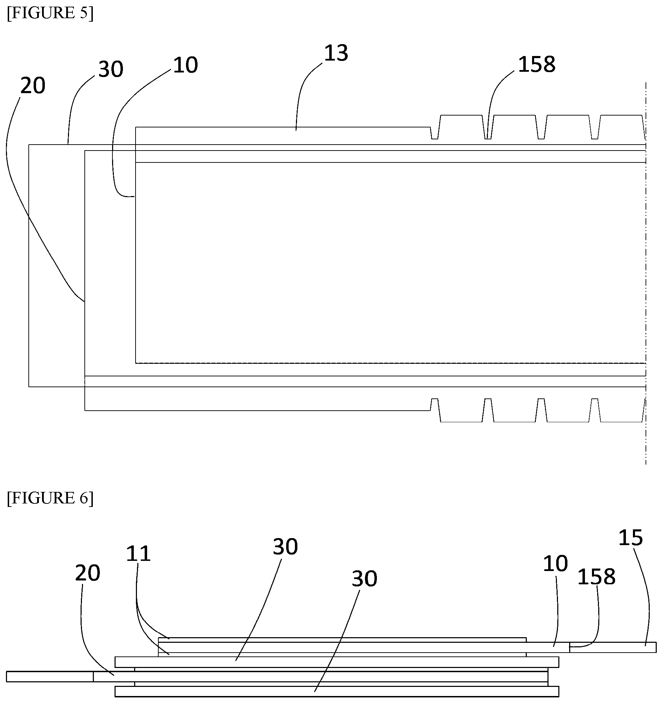

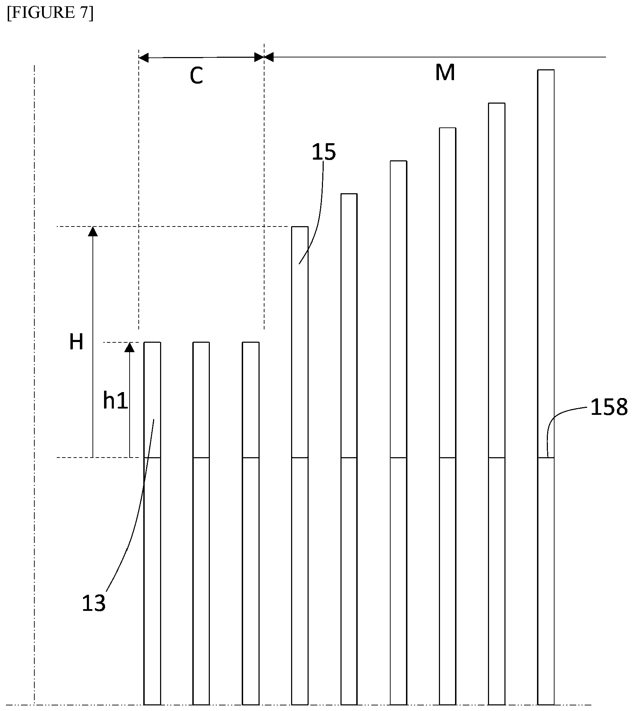

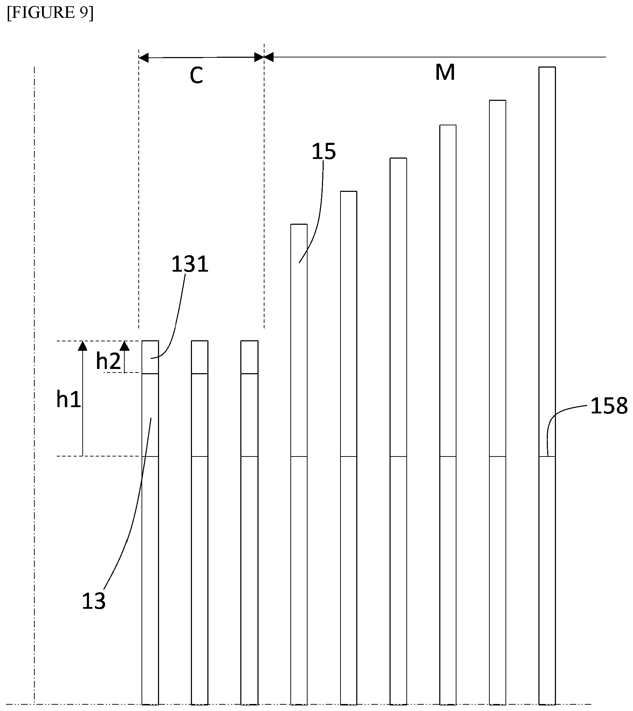

Referring to FIGS. 1 to 12, an electrode assembly 40 according to the embodiment may be manufactured in a cylindrical jelly-roll form by sequentially stacking a first electrode sheet 10, a separator 30, a second electrode sheet 20 and a separator 30, and winding the first electrode sheet 10 around a core axis extending in a direction corresponding to the widthwise direction of the second electrode sheet.

The first electrode sheet 10 and the second electrode sheet 20 may have different polarities. For example, when the first electrode sheet 10 is an anode, as in the embodiment, the second electrode sheet 20 may be a cathode. Since the structure of the second electrode sheet 20 corresponds to that of the first electrode sheet 10, the first electrode sheet 10 will be described below.

The first electrode sheet 10 having a predetermined width may extend in the lengthwise direction.

One or both surfaces of the first electrode sheet 10 are coated with an active material 11. A non-coated portion 12 without the active material 11 may be provided on the upper portion of the first electrode sheet 10.

The non-coated portion is provided with a first incision groove 157 extending axially outward at a plurality of locations spaced apart from each other in the lengthwise direction. The first incision groove 157 may be formed by cutting with, for example, a knife or a laser.

The non-coated portion 12 may be provided with a plurality of segmented tabs 15 divided in the lengthwise sections by the first incision groove 157.

The segmented tab 15 may extend axially outward from the first valley 158, which is the lower end of the first incision groove 157, and may have a predetermined height. The height of the segmented tab 15 may be equal to or greater than the minimum height that allows smooth bending of the segmented tab 15.

The height of the segmented tab 15 may have a shape in which the height gradually increases from the core side to the outer circumferential side. The height may increase gradually or stepwise. Apparently, the height distribution of the segmented tab 15 is not limited thereto. In addition, while the segmented tab 15 having a shape of an isosceles trapezoid is exemplified in the embodiment, the shape may not be limited thereto. For example, the segmented tab may have various shapes such as a trapezoid, a triangle, a parallelogram and a semicircle.

The non-coated portion 12 may be divided into a main section M wherein the segmented tab 15 is provided in the lengthwise direction, a core section C arranged closer to the core than the main section M, and an outer circumferential section O arranged circumferentially outer than the main section M.

The plurality of segmented tabs 15 are provided in the main section M. The outer circumferential section O and the core section C are not provided with the segmented tabs 15.

The outer circumferential section O may have a length approximately equal to the last turn of the electrode assembly 40. When the segmented tab 15 is present in the last turn of the electrode assembly 40, there is a risk that the segmented tab 15 on the outer circumferential side may be deformed during handling of the electrode assembly 40 for assembling a battery cell. However, when an outer circumferential section O is provided as described above, such concern may be eliminated. The outer circumferential section O may be omitted when necessary.

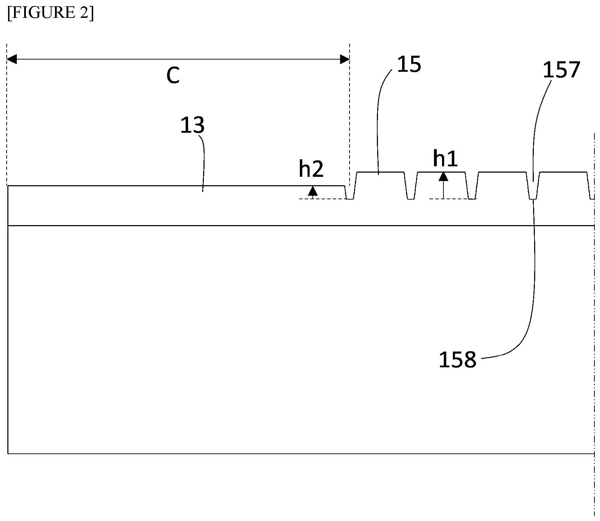

Referring to FIG. 2, the core section C is provided with a plateau 13 extending in the lengthwise direction and protruding axially outward by a first height h1 from the first valley 158 of the first incision groove 157. The first height h1 may be determined within a range that ensures strength sufficient to prevent axial buckling of the plateau 13 during the bending and contacting process of the segmented tab 15, which will be described later.

The plurality of segmented tabs 15 are bent in a manner that the upper ends of the plurality of segmented tabs 15 face radially inward at a predetermined position of the lower ends thereof. Accordingly, the upper end of the plateau 13 is in direct contact with and electrically connected to the inner circumferential surface (inner side surface) of the bent segmented tabs.

When the segmented tab positioned adjacent to the core section C is referred to as the first segmented tab 15, the upper end of the plateau 13 is in direct contact with and electrically connected to the inner side surface of the first segmented tab 15.

To achieve this, the first height h1 of the plateau 13 is set to be lower than the height H of the first segmented tab 15.

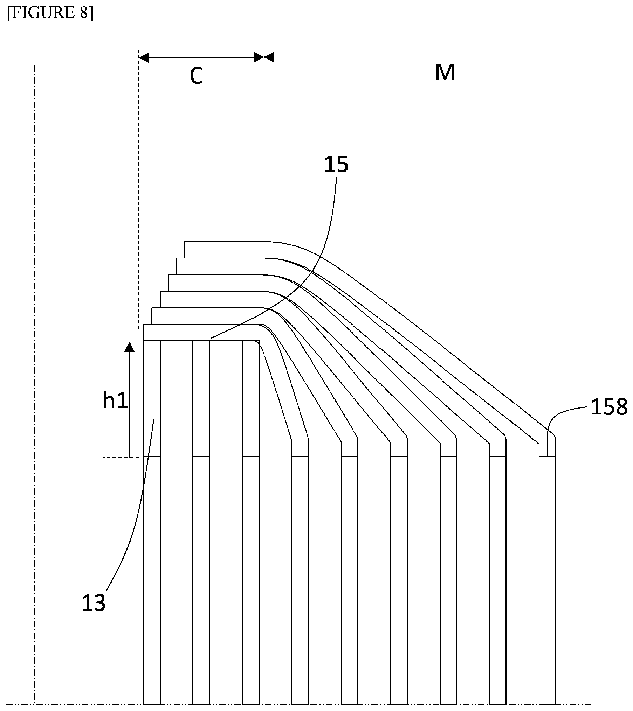

As shown in FIG. 8, the plateau 13 may be maintained to extend axially outward so as to be in contact with the inner side surface of the first segmented tab 15. To prevent buckling of the plateau 13, the first height h1 of the plateau 13 may be set within a range of 0.5mm to 1.5mm.

The height H of the first segmented tab 15 may be approximately 3mm or more to facilitate smooth bending.

The upper end of the plateau 13 is positioned axially outer than the axial end of the separator 30. Accordingly, even when the plateau 13 buckles, deformation of the separator 30 due to the buckling of the plateau 13 may be minimized.

The first valley 158 is positioned axially outer than the axial end of the separator 30. Accordingly, when bending the segmented tab 15, deformation of the separator 30 due to the bending of the segmented tab 15 may be prevented.

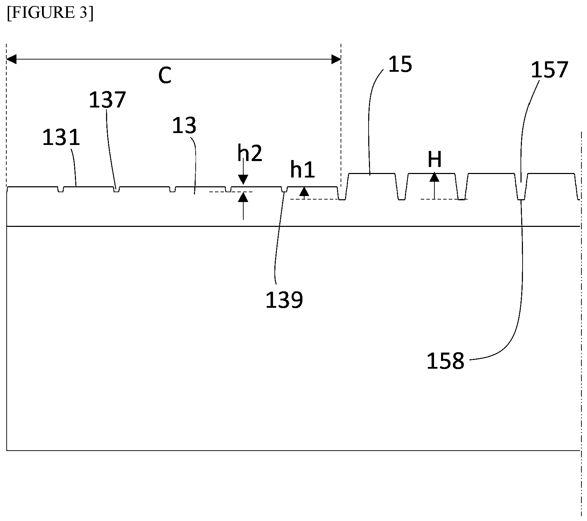

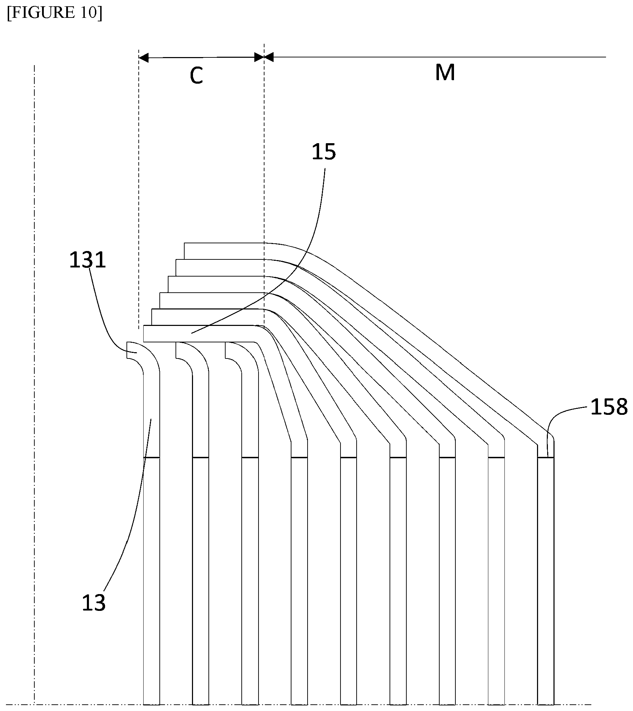

Referring to FIG. 3, the upper end of the plateau 13 is divided by a second incision groove 137 extending axially outward at a plurality of locations spaced apart from each other in the lengthwise direction. Accordingly, an elastic protrusion 131 that is relatively more elastically deformable than the plateau 13 is provided between two adjacent second incision grooves 137. The upper end of the elastic protrusion 131 is elastically deformed to be curved radially inward, as shown in FIG. 10, and may be in contact with and electrically connected to the inner side surface of the first segmented tab 15.

The second valley 139 is positioned axially outer than the axial end of the separator 30. The second valley 139 is positioned axially outer than the first valley 158.

The second height h2 from the second valley 139 of the second incision groove 137 to the outer axial end of the elastic protrusion 131 may be less than the first height h1.

The second height h2 may be equal to or greater than 0.5mm and equal to or less than 1.0mm.

The difference between the first height h1 and the second height h2 may be equal to or greater than 0.5mm and equal to or less than 1.0mm.

Since the elastic protrusion 131 has the second incision grooves 137 on both sides, the elastic protrusion 131 may have relatively weak rigidity and be prone to deformation. When the elastic protrusion 131 is elastically deformed and extends in the radial direction, not only does the contact area with the segmented tab 15 increase, but the buckling stability of the plateau 13 may also increase.

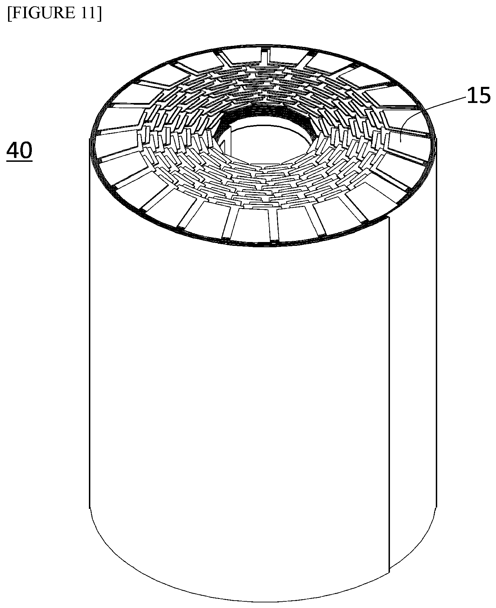

By winding the electrode assembly 40 and bending the segmented tab 15 in above-described manner, the axial end of the electrode assembly 40 may be provided with a flat surface as shown in FIG. 11.

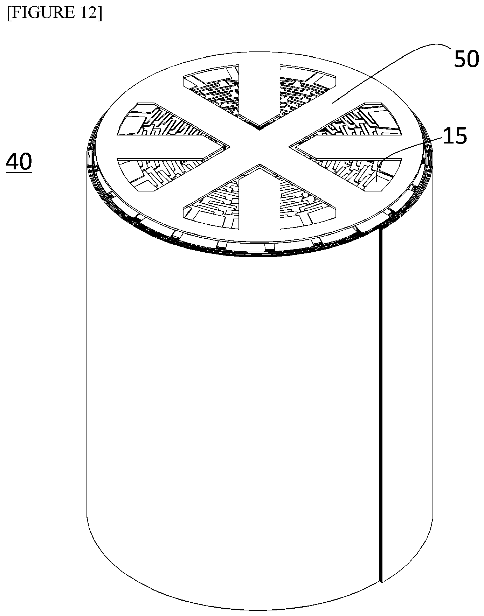

Next, as shown in FIG. 12, a current collecting plate may be stacked on the axial end of the electrode assembly, and the current collecting plate 50 may be bonded to the bent portion of the flattened segmented tab 15. The bonding may be accomplished by welding wherein the outer surface of the current collecting plate 50 is irradiated with a laser. Apparently, the bonding or welding method is not limited thereto.

The segmented tab 15 may be provided on only one of two ends of the electrode assembly 40, or on both ends. An electrode assembly 40 provided with the segmented tabs 15 on both ends is exemplified in the embodiment.

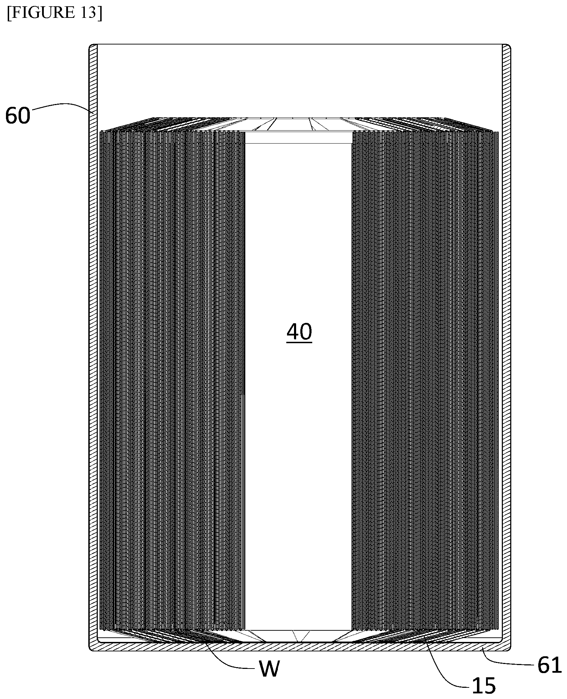

Hereinafter, a method for implementing cylindrical battery cells of various structures by employing the above-described electrode assembly 40 is described with reference to FIGS. 13 to 18.

The battery cell is manufactured by accommodating the electrode assembly 40 in a can 60 and covering and closing the open end of the can 60 with a cap 70.

The electrode assembly 40 may be connected to the electrode terminal of the can using a current collecting plate 50, or a segmented tab 15 may be directly connected to the electrode terminal without the current collecting plate 50.

For example, referring to FIG. 13, the segmented tab 15 provided at the end of the electrode assembly 40 may be brought into direct contact with and bonded to the bottom member 61 of the can 60 without a current collecting plate 50. The bonding may be accomplished by welding by irradiating a laser from the outside of the bottom member 61 of the can 60 to the surface of the bottom member 61. Apparently, the bonding or welding method is not limited thereto.

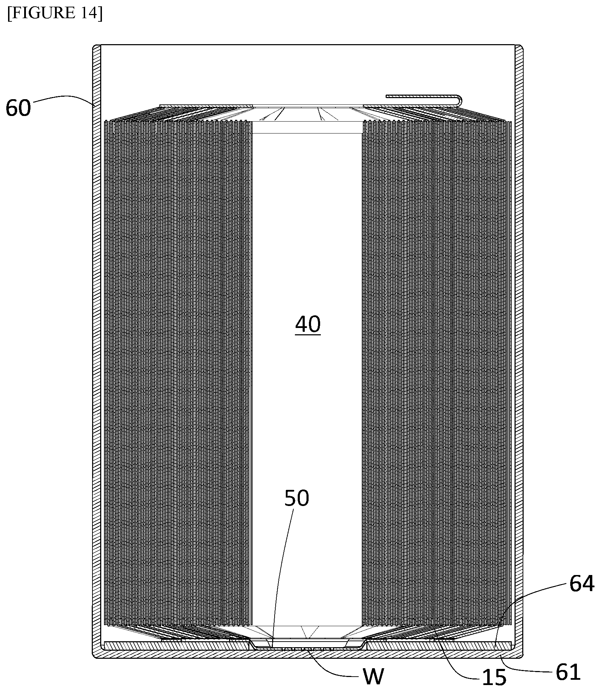

As another example, referring to FIG. 14, the center portion of the current collecting plate 50 provided at the end of the electrode assembly 40 may be brought into direct contact with and bonded to the bottom member 61 of the can 60. As the bonding method, a resistance welding method may be applied by bringing a first resistance electrode into contact with the outer center portion of the bottom member 61 of the can 60, bringing a second resistance electrode into contact with the inner side surface of the center portion of the current collecting plate 50 through the core cavity of the electrode assembly 40, and applying a high current to weld, or an ultrasonic welding method may be applied. In the resistance welding method, a donut-shaped insulator 64 may be interposed between the current collecting plate 50 and the bottom member 61 to prevent current dispersion. Apparently, the bonding or welding method is not limited thereto.

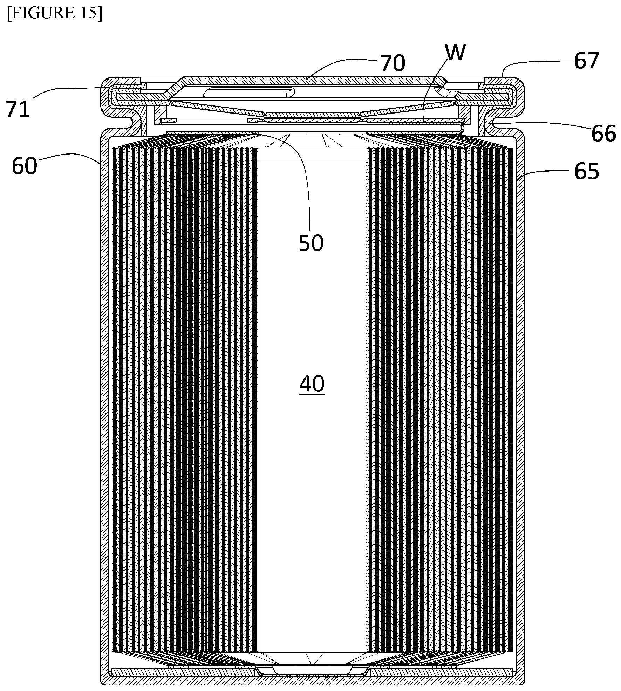

Next, referring to FIG. 15, the current collecting plate 50 may be electrically connected to a cap 70 that covers and closes the open end of the sidewall member 65 of the can 60. For example, the current collecting plate 50 may be first bonded to the cap 70, and then the open end of the sidewall member 65 may be covered with the cap 70 and a crimped portion 67 may be formed. The cap 70 may be pressed by beading portion 66 and the crimped portion 67 with the edge thereof interposed between a cap gasket 71.

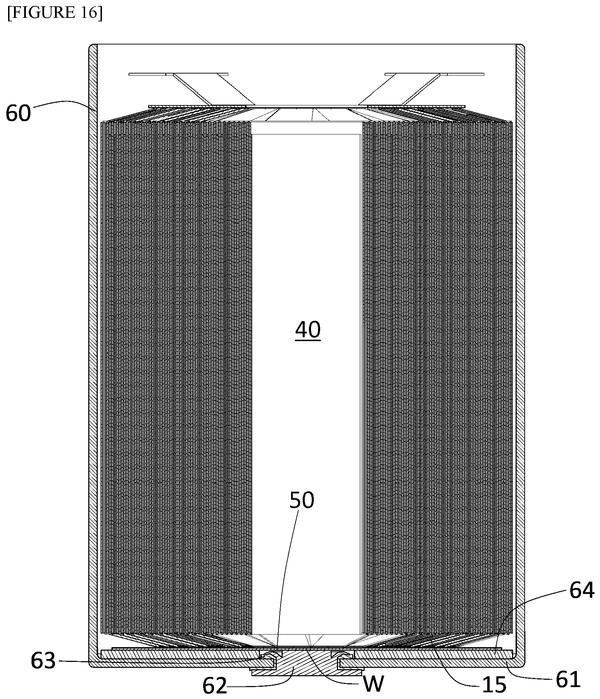

Next, referring to FIG. 16, the center portion of the current collecting plate 50 of the electrode assembly 40 may be bonded to an electrode terminal 62 fixed to the center portion of the bottom member 61 of the can 60 with the terminal gasket 63 interposed therebetween. Here, an insulator 64 may be interposed between the current collecting plate 50 and the bottom member 61 of the can 60 to prevent a short circuit.

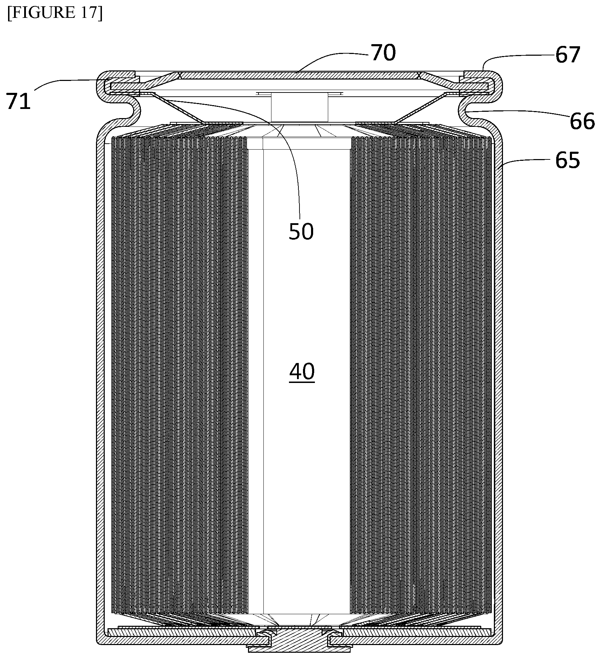

Next, referring to FIG. 17, the current collecting plate 50 extends to the compressed portion of the can 60 and the cap 70 and is bonded to the upper portion of the beading portion 66 of the can 60 at the corresponding portion to be electrically connected to the can 60. Referring to FIG. 17, the cap 70 may be insulated from the can 60 by the cap gasket 71 and may not conduct electricity.

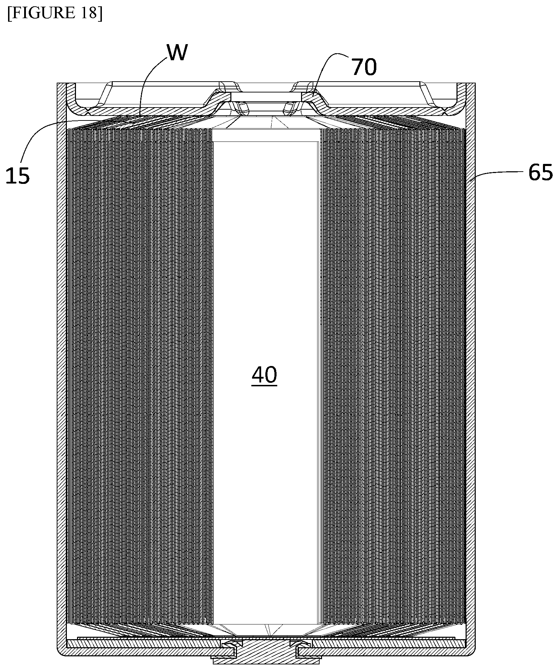

Next, referring to FIG. 18, the segmented tab 15 of the electrode assembly 40 may be directly bonded and electrically connected to the cap 70 that covers and closes the open end of the can 60. The bonding may be accomplished by irradiating the surface of the cap 70 with a laser. Additionally, the edge of the cap 70 may be fixed and electrically connected to the edge of the sidewall member 65 of the can 60 by welding or other methods.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode assembly comprising:
a jelly roll shaped electrode sheet extending in a lengthwise direction and having a predetermined width, the electrode sheet provided with a non-coated portion without an active material at one widthwise end thereof and wound around a core axis parallel to a widthwise direction; and
a plurality of segmented tabs provided by dividing the non-coated portion by a first incision groove extending axially outward at a plurality of locations spaced apart in the lengthwise direction,
wherein the non-coated portion comprises:, in the lengthwise direction, a main section; and a core section extending longitudinally inward from a core side end of the main section to a core side end of the electrode sheet,
the plurality of segmented tabs are provided in the main section,
a plateau extending in the lengthwise direction is provided in the core section, the plateau protruding axially outer than a first valley of the first incision groove defining the plurality of segmented tabs by a first height,
the plurality of segmented tabs are radially bent at predetermined positions of lower ends thereof in a manner that upper ends thereof face a core side of a jelly roll, and
an upper end of the plateau is in contact with and electrically connected to an inner side surface of a first segmented tab that is bent and disposed adjacent to a radially outer side of the plateau.

2. The electrode assembly of claim 1, wherein the plateau extends axially outward.

3. The electrode assembly of claim 1, wherein the first height of the plateau is less than a height of the first segmented tab.

4. The electrode assembly of claim 1, wherein the electrode sheet is stacked on and wound with a separator, and
the upper end of the plateau is positioned axially outer than an axial end of the separator.

5. The electrode assembly of claim 1, wherein the electrode sheet is stacked on and wound with a separator, and
the first valley is positioned axially outer than an axial end of the separator.

6. The electrode assembly of claim 1, wherein the first height is equal to or greater than 0.5mm and equal to or less than 1.5mm.

7. The electrode assembly of claim 1, wherein the plateau is provided with a plurality of elastic protrusions divided by a second incision groove extending axially outward at a plurality of locations spaced apart in the lengthwise direction, and
upper ends of the plurality of elastic protrusions are in contact with and electrically connected to the inner side surface of the first segmented tab.

8. The electrode assembly of claim 7, wherein the plurality of elastic protrusions are curved radially inward and in contact with and electrically connected to inner circumferential surfaces of the plurality of segmented tabs.

9. The electrode assembly of claim 7, wherein the second valley is positioned axially outer than the first valley.

10. The electrode assembly of claim 7, wherein a second height from a second valley of the second incision groove to an outer axial end of the plurality of elastic protrusions is less than the first height.

11. The electrode assembly of claim 10, wherein the electrode sheet is stacked on and wound with a separator, and
the second valley is positioned axially outer than an axial end of the separator.

12. The electrode assembly of claim 10, wherein the second height is equal to or greater than 0.5mm and equal to or less than 1.0mm.

13. The electrode assembly of claim 7, wherein a difference between the first height and the second height is equal to or greater than 0.5mm and equal to or less than 1.0mm.

14. The electrode assembly of any one of claims 1 to 13, wherein a current collecting plate axially faces and is welded to outer side surfaces of the plurality of segmented tabs to be electrically connected thereto.

15. A battery cell comprising:
an electrode assembly of any one of claims 1 to 13;
a can accommodating the electrode assembly; and
a cap closing an open end of the can,
wherein outer side surfaces of the plurality of segmented tabs are welded to a bottom member of the can.

16. A battery cell comprising:
an electrode assembly of any one of claims 1 to 13;
a can accommodating the electrode assembly; and
a cap closing an open end of the can,
wherein outer side surfaces of a plurality of segmented tabs are welded to the cap.

17. A battery cell comprising:
an electrode assembly of claim 14;
a can accommodating the electrode assembly; and
a cap closing an open end of the can,
wherein a center portion of a current collecting plate is welded to a bottom member of the can.

18. A battery cell comprising:
an electrode assembly of claim 14;
a can accommodating the electrode assembly; and
a cap closing an open end of the can,
wherein a center portion of a current collecting plate is welded to an electrode terminal installed at a center portion of a bottom member of the can in insulated and sealed manner.

19. A battery cell comprising:
an electrode assembly of claim 14;
a can accommodating the electrode assembly; and
a cap closing an open end of the can,
wherein a current collecting plate is electrically connected to the can or the cap.
